# DEMANDE DE BREVET EUROPEEN

(11) **EP 0 666 195 A1**
(43) Date de publication de la demande: **09.08.1995**
(21) Numéro de dépôt: 95400236.6
(22) Date de dépôt: 03.02.1995
(51) Int. Cl.: B60Q 1/076

(54) **Projecteur de véhicule comportant des moyens de montage d'un correcteur de l'inclinaison du réflecteur**

(30) Priorité: 03.02.1994 FR 9401217
(71) Demandeur: VALEO VISION, 93000 Bobigny (FR)
(72) Inventeur: Pinson, Ghislaine, F-92390 Villeneuve la Garenne (FR)
(74) Mandataire: Le Forestier, Eric

(57) **Abrégé**

L'invention concerne un projecteur de véhicule, notamment de véhicule automobile, comprenant un boîtier (1) abritant au moins une lampe et un réflecteur (2), ainsi qu'un correcteur électrique amovible (3) comprenant une tige de sortie (31), pour faire varier l'inclinaison du réflecteur (2), le boîtier (1) et le correcteur (3) comportant des moyens homologues (11, 30) de fixation mutuelle qui incluent des aménagements (301,302;101) d'encliquetage élastique par simple translation axiale relative du boîtier (1) et du correcteur (3), caractérisé en ce que lesdits moyens comprennent en outre des éléments de déverrouillage (102) aptes à permettre le dégagement des aménagements d'encliquetage par rotation relative du boîtier (1) et du correcteur (3).

## Description

La présente invention est relative à un projecteur de véhicule, notamment de véhicule automobile.

Un projecteur connu comprend un boîtier abritant au moins une lampe et un réflecteur, ainsi qu'un correcteur électrique amovible pour faire varier l'inclinaison du réflecteur.

Bien entendu, pour le montage du correcteur sur le boîtier, ces deux éléments comportent des moyens homologues de fixation mutuelle prévus également pour un démontage facile, par exemple en vue de changer le correcteur.

Jusqu'à maintenant, le montage du correcteur sur le boîtier se fait notamment à l'aide de vis.

On connaît également un système de montage à baïonnette avec lequel l'engagement du correcteur sur le boîtier se fait d'abord par translation axiale du correcteur vers le boîtier, puis mouvement de rotation autour dudit axe sur une fraction de tour. Le démontage des deux pièces s'effectue bien entendu en inversant ces deux mouvements. Les documents GB-A- 2 089 958 et GB-A-2 103 779 décrivent de tels dispositifs de fixation à baïonnette.

La relative sophistication de ce dernier système de fixation présente un inconvénient majeur. En effet, il est très difficile à automatiser du fait que l'engagement axial du correcteur sur le boîtier doit être fait selon une orientation angulaire précise pour pouvoir permettre la fixation des deux pièces par rotation sur une fraction de tour, et du fait de la nécessité d'effectuer successivement deux mouvements différents.

De ce fait, ce montage est encore actuellement effectué à la main, ce qui a, bien entendu, des répercussions non négligeables sur le prix de revient du projecteur. De plus, il s'agit d'une opération longue et fastidieuse.

Par ailleurs, on connaît par le document FR-A-2 689 071 un système de montage d'un correcteur sur un boîtier de projecteur dans lequel le correcteur comporte des bras élastiques formant éléments d'encliquetage. Ce système peut être mis en place dans une ouverture du boîtier de projecteur par translation axiale. L'un au moins des bras peut être encliqueté en direction radiale par rapport à la direction d'enfoncement du correcteur. Le système comprend un organe de déverrouillage, distinct du boîtier de projecteur et du correcteur, destiné à s'intercaler entre ceux-ci. Cet organe peut tourner autour d'un axe parallèle à la direction d'enfoncement du correcteur et permet d'escamoter les bras élastiques.

On notera que ce système nécessite, hormis le boîtier de projecteur et le correcteur, la présence d'une pièce additionnelle de déverrouillage. Ceci se répercute sur le prix de revient du projecteur et en complique la fabrication et le montage.

La présente invention a pour but d'apporter une solution aux problèmes exposés ci-dessus en proposant un projecteur qui permette un montage du correcteur de manière automatisée, ceci sans pièce de montage additionnelle,et qui permette un démontage manuel aisé du correcteur.

Un autre but de l'invention est de proposer un projecteur de conception simple, économique et qui ne nécessite pas d'équipements sophistiqués pour sa fabrication.

Ainsi, selon la présente invention, ce projecteur, qui comprend un boîtier abritant au moins une lampe et un réflecteur, ainsi qu'un correcteur électrique amovible comprenant une tige de sortie, pour faire varier l'inclinaison du réflecteur, le boîtier et le correcteur portant des moyens homologues de fixation mutuelle qui incluent des aménagements d'encliquetage élastique par simple translation axiale relative du boîtier et du correcteur, est remarquable par le fait que ces moyens comprennent en outre des éléments de déverrouillage aptes à permettre le dégagement des aménagements d'encliquetage par rotation relative du boîtier et du correcteur.

Par ailleurs, selon d'autres caractéristiques avantageuses mais non limitatives :
- lesdits aménagements comprennent un manchon tubulaire formant une partie de montage du correcteur sur le boîtier, duquel débouche la tige du correcteur, I'extrémité libre de ce manchon étant pourvue, sur sa surface externe, de pattes élastiquement déformables en direction radiale ;
- lesdites pattes sont équidistantes angulairement et elles s'étendent vers l'arrière du manchon en formant avec celui-ci un angle aigu ;
- lesdits aménagements comprennent en outre une ouverture circulaire formée dans une paroi du boîtier, son diamètre est compris entre celui du manchon et le diamètre mesuré au niveau des extrémités libres desdites pattes, dans leur position non déformée et lesdites pattes sont aptes à être suffisamment déformées pour franchir ladite ouverture ;
- lesdits éléments de déverrouillage consistent en une série d'échancrures qui bordent ladite ouverture, dont le nombre et la disposition correspondent à ceux des pattes du manchon de sorte que par suite de la rotation du manchon autour de son axe, il est possible de faire correspondre lesdites pattes et échancrures, en vue de retirer le correcteur du boîtier par translation selon ledit axe ;
- la dimension des échancrures suivant la périphérie de l'ouverture est égale ou légèrement supérieure à la dimension correspondante des pattes ;
- la partie du manchon opposée aux pattes se poursuit par une partie de plus grand diamètre, la distance séparant cette partie de l'extrémité libre des pattes étant égale à l'épaisseur de ladite paroi ;
- au moins une patte présente une forme et/ou une dimension différente de celle(s) des autres pattes ;
- il est prévu sur le manchon et/ou sur le bord de l'ouverture du boîtier des aménagements formant frein s'opposant à la rotation intempestive du correcteur.

D'autres caractéristiques et avantages de l'invention apparaîtront de la description et des dessins annexés qui en illustrent un mode de réalisation préférentiel.

Sur ces dessins :
- les figures 1 et 2 sont des schémas, en coupe verticale, d'un projecteur comportant un boîtier et un correcteur électrique d'inclinaison, destinés à montrer leur engagement réciproque ;
- la figure 3 est une vue en perspective des moyens qui équipent le boîtier et le correcteur afin de réaliser leur fixation mutuelle ;
- les figures 4 à 7 sont des schémas, en coupe verticale des moyens de la figure 3, destinés à illustrer les différentes étapes de montage (et de démontage) d'une pièce sur l'autre.

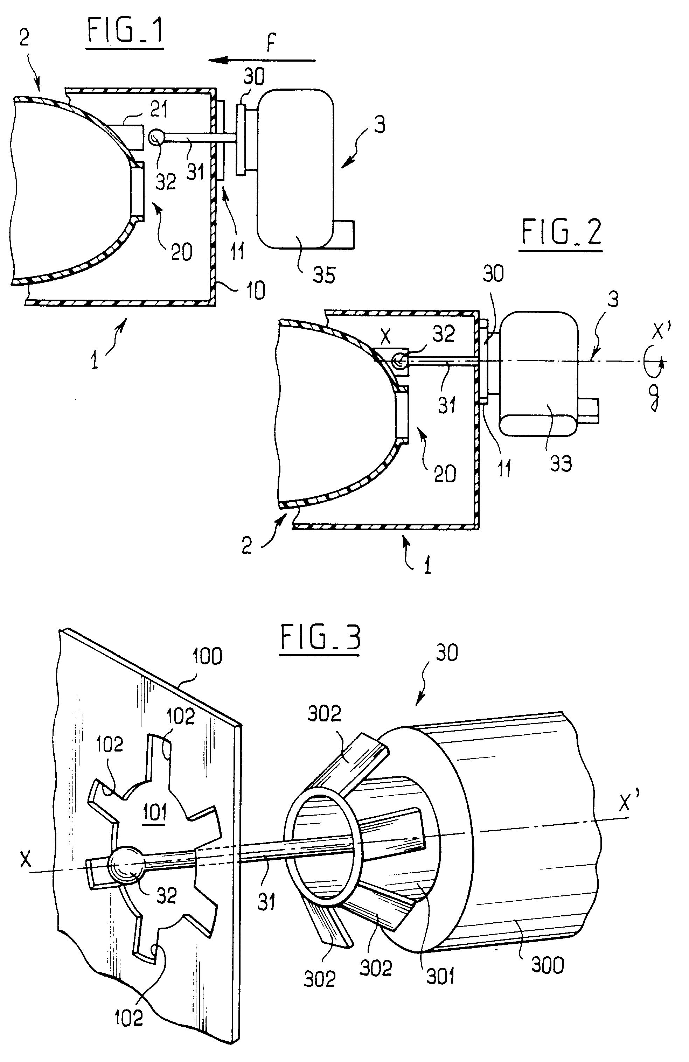

On a représenté sur les figures 1 et 2 annexées et, de manière très schématique, un projecteur de véhicule automobile conforme à l'invention.

Il comprend un boîtier référencé 1 qui, pour une meilleure lecture des figures, a une forme parallélépipèdique et renferme un réflecteur 2 dont le fond présente une ouverture pour la mise en place d'une lampe non représentée.

Non loin de cette ouverture et sur sa face externe, le réflecteur 2 est équipé d'une pièce 21 de montage de l'extrémité sphérique 32 de la tige de sortie 31 d'un correcteur électrique amovible 3 d'orientation de faisceau.

Pour cette mise en place, la paroi arrière 10 du boîtier est pourvue d'une ouverture permettant le passage de ladite tige.

Au niveau de cette ouverture et du côté de sa face externe, le boîtier est pourvu de moyens 11 de montage et de fixation du correcteur.

Ce dernier comporte, comme cela est bien connu, un moteur électrique 33 dont l'actionnement permet de déplacer en translation axiale, c'est-à-dire selon l'axe XX', la tige 31 en vue de régler l'orientation du faisceau engendré par le réflecteur.

Par ailleurs, le correcteur comporte des moyens 30 complémentaires des moyens 11 pour le verrouillage du correcteur sur le boîtier.

Nous décrivons ci-après ces moyens, plus spécifiquement en référence à la figure 3.

Comme le montre cette figure, les moyens 30 comprennent un manchon tubulaire 301 qui forme une partie d'extrémité et de montage du correcteur sur le boîtier.

Ce manchon est traversé par la tige 31 du correcteur et est séparé du moteur de celui-ci (non représenté) par une partie antérieure 300 de plus grand diamètre.

De préférence, la coque qui renferme le moteur du correcteur est d'une seule pièce avec le manchon 301 et est de préférence réalisée en matière plastique dure, mais élastiquement déformable.

L'extrémité du manchon opposée à la partie 300 est pourvue de pattes 302 qui prennent naissance sur sa face externe.

Ces pattes, par exemple au nombre de six, font corps avec le manchon et sont équidistantes angulairement les unes des autres. Une ou plusieurs de ces pattes peuvent avoir une largeur ou une forme différente de celle des autres pattes, à des fins de détrompage permettant d'amener le correcteur en place avec l'orientation adéquate.

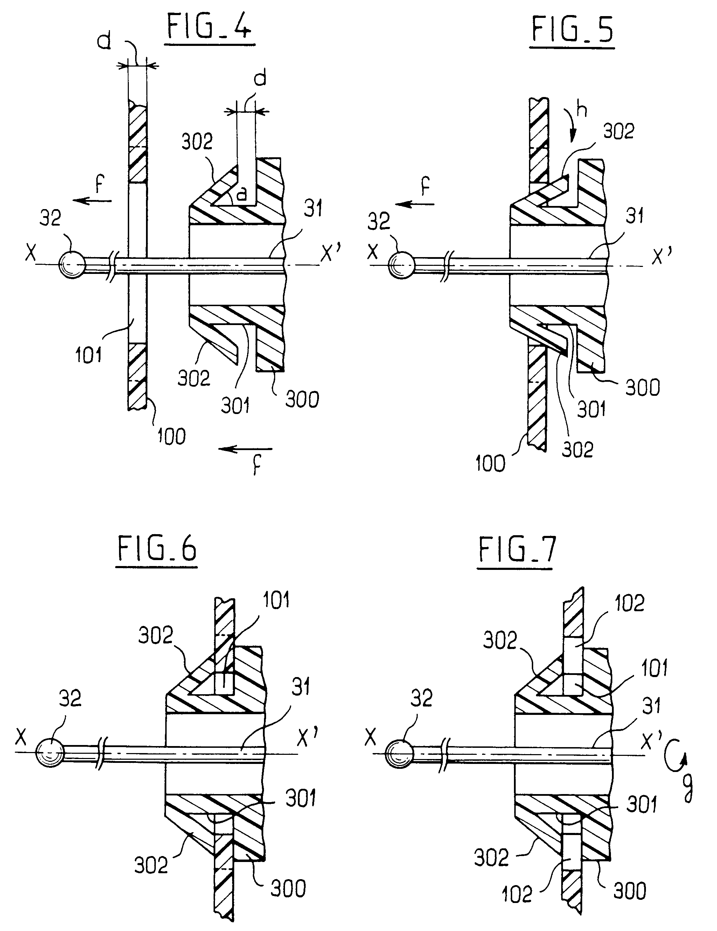

Comme le montrent les figures 3 à 7, ces pattes sont orientées en direction de la partie 300 et forment avec le manchon 301, un angle aigu a (figure 4).

Lorsque l'on soumet ces pattes à un effort radial dirigé vers le centre du manchon, elles se déforment élastiquement de telle sorte que leur extrémité libre tend à se rapprocher du manchon.

En position de repos (figures 3 et 4), on appelle d la distance qui sépare leur extrémité libre du rebord de la partie 300.

Les moyens de fixation comprennent également les moyens 11 prévus dans la zone du boîtier 1 qui borde l'ouverture de passage de la tige 31 du correcteur.

Ainsi, dans la forme de réalisation des figures 3 à 7, ces moyens sont situés au niveau d'une portion de paroi 100 dans laquelle est formée une ouverture circulaire qui fait communiquer l'intérieur et l'extérieur du boîtier.

Le diamètre de cette ouverture, qui est destinée à être traversée par la tige 31 du correcteur, est supérieur au diamètre externe du manchon 301 mais inférieur au diamètre mesuré au niveau des extrémités libres des pattes 302, dans leur position de repos.

De plus, l'ouverture 102 est bordée d'échancrures 102 de forme rectangulaire dont le nombre est identique à celui des pattes 302 du manchon 301. Par ailleurs, leur écartement angulaire est égal à celui des pattes 302. Dans le cas de la figure 6, il s'agit de six échancrures séparées deux à deux de 60°. La dimension des échancrures 102 dans la direction périphérique (en l'occurence leur largeur) est égale ou légèrement supérieure à celle des pattes 302.

Enfin on notera que l'épaisseur de la portion de paroi 100 est égale à d.

Nous allons expliquer ci-après le montage du correcteur 3 sur le boîtier 1, en référence aux figures 4 à 7 annexées.

On commence par présenter le correcteur face à l'ouverture 101 de sorte que la tige 31 se situe dans l'axe de ladite ouverture. On déplace alors le correcteur en translation axiale (flèche f) de sorte que la tige 31 traverse l'ouverture.

Durant cette manoeuvre, les pattes 302 arrivent progressivement en butée contre le pourtour de l'ouverture 101.

En continuant à déplacer le correcteur selon le sens de la flèche f, les pattes 302 tendent à s'escamoter radialement en direction du manchon 301 (flèche g) de sorte que celles-ci franchissent progressivement l'ouverture 101.

Une fois celle-ci franchie, l'effort qui tendait à les déformer n'existe plus, de sorte qu'elles reprennent leur position initiale (figure 6).

Du fait que l'épaisseur d de la paroi 100 est égale à la distance qui sépare le rebord libre des pattes 302 de la partie 300, cette paroi se trouve pincée entre ces deux éléments, réalisant ainsi une fixation correcte.

On remarquera que du fait de ce montage par encliquetage élastique, seule une translation du correcteur est nécessaire, si bien que cette opération peut être facilement automatisée.

Pour démontrer le correcteur (figure 7), il suffit de lui faire subir, autour de l'axe XX' une légère rotation (flèche g ou dans le sens opposé) de façon à faire coïncider les pattes 302 avec les échancrures 102. Le correcteur peut alors être retiré par un mouvement de translation opposé à la flèche f. Dans le cas où les échancrures sont au nombre de six régulièrement réparties autour de l'ouverture 101, la rotation à effectuer est typiquement de 30°.

Pour bien assurer l'immobilisation en rotation du correcteur après son montage, on prévoît, de préférence sur le manchon 301 en coopération avec les régions de plus petit diamètre du bord de l'ouverture 101, des moyens (reliefs ou analogues) formant frein ou créant, pour le démontage, la nécessité de franchir un point dur lors du pivotement du correcteur.

Par ailleurs, on peut prévoir, sur la paroi de boîtier 100 autour de l'ouverture 101 et/ou sur le manchon 301, des aménagements destinés à faciliter le centrage et/ou le guidage du correcteur lors de sa translation en vue du montage.

On notera en outre que, pour minimiser l'amplitude du mouvement angulaire du correcteur lors de son démontage, les pattes 302 et les échancrures 102 présentent de préférence une faible largeur, typiquement de quelques millimètres. Cette caractéristique trouve sont intérêt dans le cas où le correcteur est difficilement accessible ou lorsque son débattement est limité par des parties du véhicule situées à son proche voisinage.

Bien que dans l'exemple décrit ci-dessus, le correcteur soit prévu à l'extérieur du boîtier, l'invention trouve également application avec un correcteur monté à l'intérieur du boîtier.

## Revendications

1. Projecteur de véhicule, notamment de véhicule automobile, comprenant un boîtier (1) abritant au moins une lampe et un réflecteur (2), ainsi qu'un correcteur électrique amovible (3) comprenant une tige de sortie (31), pour faire varier l'inclinaison du réflecteur (2), le boîtier (1) et le correcteur (3) portant des moyens homologues (11, 30) de fixation mutuelle qui incluent des aménagements (301, 302; 101) d'encliquetage élastique par simple translation axiale relative du boîtier (1) et du correcteur (3), caractérisé en ce que lesdits moyens comprennent en outre des éléments de déverrouillage (102) aptes à permettre le dégagement des aménagements d'encliquetage par rotation relative du boîtier (1) et du correcteur (3).

2. Projecteur selon la revendication 1, caractérisé en ce que lesdits aménagements comprennent un manchon tubulaire (301) formant une partie de montage du correcteur sur le boîtier, duquel débouche la tige (31) du correcteur, I'extrémité libre de ce manchon étant pourvue, sur sa surface externe, de pattes élastiquement déformables (302) en direction radiale.

3. Projecteur selon la revendication 2, caractérisé en ce que lesdites pattes (302) sont équidistantes angulairement et en ce qu'elles s'étendent vers l'arrière du manchon en formant avec celui-ci un angle aigu (a).

4. Projecteur selon la revendication 2 ou 3, caractérisé en ce que lesdits aménagements comprennent en outre une ouverture circulaire (101) formée dans une paroi (10) du boîtier, en ce que son diamètre est compris entre celui du manchon (301) et le diamètre mesuré au niveau des extrémités libres desdites pattes (302) dans leur position non déformée, et en ce que lesdites pattes sont aptes à être suffisamment déformées pour franchir ladite ouverture (101).

5. Projecteur selon la revendication 4, caractérisé en ce que lesdits éléments de déverrouillage consistent en une série d'échancrures (102) qui bordent ladite ouverture (101), dont le nombre et la disposition correspondent à ceux des pattes (302) du manchon (301) de sorte que par suite de la rotation du manchon (301) autour de son axe (XX'), il est possible de faire correspondre lesdites pattes (302) et échancrures (102), en vue de retirer le correcteur du boîtier par translation selon ledit axe (XX').

6. Projecteur selon la revendication 5, caractérisé en ce que la dimension des échancrures (102) suivant la périphérie de l'ouverture (101) est égale ou légèrement supérieure à la dimension correspondante des pattes (302).

7. Projecteur selon l'une des revendications 3 à 6, caractérisé en ce que la partie du manchon opposée aux pattes (302) se poursuit par une partie (300) de plus grand diamètre, la distance séparant cette partie de l'extrémité libre des pattes étant égale à l'épaisseur de ladite paroi (10).

8. Projecteur selon l'une des revendications 2 à 7, caractérisé en ce qu'au moins une patte (302) présente une forme et/ou une dimension différente de celle(s) des autres pattes.

9. Projecteur selon la revendication 4 ou 5, caractérisé en ce qu'il est prévu sur le manchon (301) et/ou sur le bord de l'ouverture (101) du boîtier des aménagements formant frein s'opposant à la rotation intempestive du correcteur.
